Europäisches Patentamt

European Patent Office

Office européen des brevets

(19)

(11) Numéro de publication : **0 153 542**
**B1**

(12) FASCICULE DE BREVET EUROPÉEN

(45) Date de publication du fascicule du brevet :
02.03.88

(51) Int. Cl.⁴ : **F 16 L 33/08**

(21) Numéro de dépôt : 84402755.7

(22) Date de dépôt : 28.12.84

(54) Collier de serrage et son procede de fabrication.

(30) Priorité : 17.02.84 FR 8402451

(43) Date de publication de la demande :
04.09.85 Bulletin 85/36

(45) Mention de la délivrance du brevet :
02.03.88 Bulletin 88/09

(84) Etats contractants désignés :
BE DE GB IT SE

(56) Documents cités :
US-A- 3 747 172
US-A- 3 981 053
US-A- 4 308 648

(73) Titulaire : **Etablissements CAILLAU S.A.R.L.**
**28, rue Ernest Renan**
**F-92130 Issy-les-Moulineaux (FR)**

(72) Inventeur : **Calmettes, Lionel**
**3, rue des Glycines**
**F-77330 Ozoir-la-Ferrière (FR)**

(74) Mandataire : **Descourtieux, Philippe et al**
**CABINET BEAU de LOMENIE 55 rue d'Amsterdam**
**F-75008 Paris (FR)**

Jouve, 18, rue St-Denis, 75001 Paris, France

EP 0 153 542 B1

## Description

On connaît déjà par le brevet FR-A-2 410 757 un collier de serrage notamment pour tuyaux en caoutchouc. Un tel collier comporte une bande généralement en métal, munie vers une extrémité de profilages et portant à son autre extrémité une cosse comportant des moyens d'ancrage desdits profilages.

On connaît également par la demande de brevet publiée EP-A-0089438 un procédé de fabrication d'une cosse à l'extrémité d'une bande de métal, ladite cosse étant susceptible de recevoir une vis dont les filets peuvent coopérer avec les profilages prévus sur l'autre extrémité de la bande.

Les colliers de serrage du type en question notamment ceux fabriqués selon le procédé ci-dessus rappelé donnent toute satisfaction mais leur fabrication en une seule pièce conduit en raison de la variété des diamètres des colliers, à surdimensionner l'épaisseur et/ou la longueur de la majeure partie de la bande, entraînant ainsi une consommation inutile de matière première et, partant, un prix relativement élevé.

On connaît d'autre part, par les brevets américains US-A-3 747 172 et US-A-3 981 053, des colliers de serrage comportant deux portions fixées l'une à l'autre après avoir été fabriquées séparément. La première portion comporte la cosse destinée à recevoir la vis de serrage et présente toujours la même longueur quel que soit le diamètre du collier. La longueur de la deuxième portion, au contraire, dépend du diamètre du collier et porte les profilages destinés à coopérer avec la vis. Les deux portions du collier sont fixées l'une à l'autre, notamment au moyen de languettes latérales prévues sur l'une des portions et engagées dans des encoches latérales prévues en correspondance sur l'autre portion.

Toutefois, ces colliers connus présentent des discontinuités rectilignes, s'étendant transversalement sur toute la largeur de la bande, au voisinage du raccordement des deux portions. Il en résulte dans de nombreux cas des défauts d'étanchéité des tuyaux à serrer.

L'invention a donc pour objet un collier réalisé à partir de deux portions de bande, le raccordement de ces dernières évitant les inconvénients qui viennent d'être signalés.

Selon l'invention, l'extrémité de la première portion de bande opposée à la cosse présente, une découpe terminale en forme de langue et, d'autre part, en arrière de cette découpe, deux languettes latérales susceptibles d'être rabattues dans le plan de ladite portion et enserrant l'extrémité, opposée aux profilages, de la deuxième portion. Cette extrémité de la deuxième portion présente un soyage dont le fond est de forme complémentaire de celle de la découpe terminale de la première portion qui peut ainsi s'engager sous ce soyage.

L'invention sera mieux comprise et ses avantages ainsi que diverses caractéristiques secondaires, aussi bien du collier lui-même que de son procédé de fabrication, apparaîtront au cours de la description qui va suivre, en référence au dessin annexé dans lequel :

- la figure 1 est une vue de profil d'un collier selon l'invention ;
- la figure 2 est une vue de profil à grande échelle de la première portion de bande ;
- la figure 3 est une vue de profil à grande échelle de la zone de raccordement de la deuxième portion de bande ;
- la figure 4 est une vue en plan de la première portion de bande ;
- la figure 5 est une vue en plan de la zone de raccordement de la deuxième portion de bande ;
- la figure 6 est une vue de profil de l'assemblage des deux portions de bande ;
- la figure 7 est une vue en plan de l'assemblage des deux portions de bande.

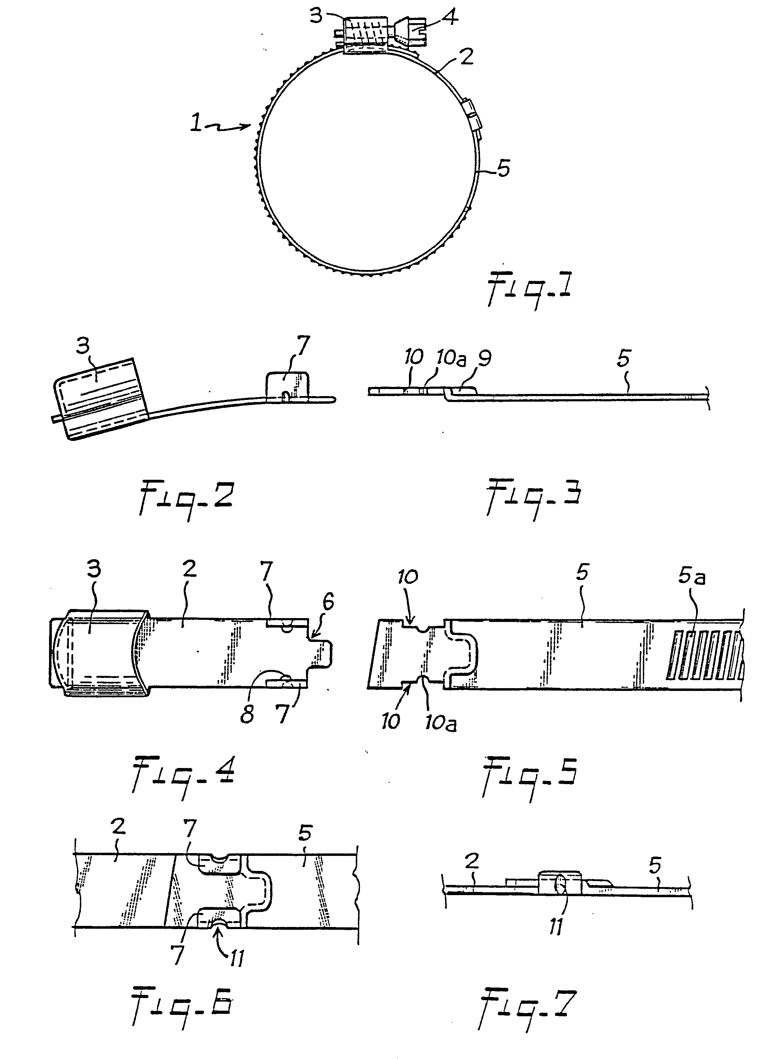

Si l'on se reporte à la figure 1, on voit un collier de serrage 1 comportant une première portion de bande 2 sur laquelle est fixée une cosse 3 recevant une vis 4. Une deuxième portion de bande 5 est fixée à la première et son extrémité libre présente des profilages 5a destinés à coopérer avec la vis 4 après avoir été engagée dans une fente de la cosse 3.

Les deux extrémités en regard de la première portion 2 et de la deuxième portion 5 de la bande présentent (figures 2 à 5), avant leur assemblage, des formes complémentaires appropriées permettant la fixation, l'une à l'autre, des deux portions de bande dans des conditions qui seront expliquées plus loin.

Plus précisément, l'extrémité de la première portion 2 présente une découpe terminale 6 en forme de langue et, immédiatement en arrière de celle-ci, deux languettes latérales 7. Avant l'assemblage (figures 2 et 4), ces languettes 7, liées aux bords longitudinaux de la portion 2 de bande, sont dressées perpendiculairement au plan de cette dernière.

Cette portion 2 de bande, sa cosse 3, ses languettes 7 et sa découpe terminale 6 sont obtenues par des opérations de matriçage, de pliage et de découpage telles, en particulier, que celles décrites par la demande publiée EP-A-89438. Au cours de ces opérations, il peut être avantageux de faire apparaître, par un matriçage approprié, des nervures 8 dans l'angle interne formé par la bande et chacune des languettes 7. Le rôle de ces nervures sera exposé plus loin.

D'autre part, l'extrémité de la deuxième portion 5 de la bande, opposée à celle munie de profilages, présente (figures 3 et 5) un soyage 9 dont la forme du fond est complémentaire de celle de la découpe terminale 6 de la première portion 2 de bande. En avant du soyage 9, il est prévu dans la bande deux encoches 10 dont la profondeur correspond à l'épaisseur des languettes 7. De préférence et comme on le voit sur les figures, le fond des encoches 10 comporte au moins une empreinte 10a dont le rôle apparaîtra plus loin.

La fabrication d'un collier de serrage tel que celui visible sur la figure 1 s'effectue alors de la façon suivante.

On suppose que l'on dispose d'un stock de « premières portions » de bande telles que celles qui viennent d'être décrites. Elles sont utilisables quel que soit le diamètre du collier à fabriquer.

En revanche, on dispose d'autant de « deuxièmes portions » de bande qu'il existe de diamètres de collier à réaliser, la seule différence entre elles étant leur longueur ; les extrémités opposées aux profilages sont cependant identiques.

La découpe terminale 6 d'une première portion 2 est engagée sous le soyage 9 d'une deuxième portion 5, de longueur appropriée, jusqu'à ce que les deux profils complémentaires soient en prise l'un avec l'autre et que les languettes 7 aient pénétré dans les encoches 10 qui constituent alors leur logement. Les languettes sont ensuite rabattues sur elles-mêmes jusqu'à ce qu'elles enserrent complètement le soyage 9 de la deuxième portion 5 de la bande. Cette dernière est ainsi fixée sur la première portion 2.

On notera ici que toutes ces opérations peuvent être réalisées sur des machines automatiques à grande cadence. La présence des nervures 8 assure une bonne rigidité des languettes 7 rabattues et empêche leur soulèvement. Les empreintes 10a évitent toute déformation gênante des languettes 7 et contribuent aussi à la fixation puisqu'elles constituent un logement pour les nervures 8.

Dans certains cas, on pourra cependant préférer créer les nervures 8 après le repliement des languettes 7 en opérant un matriçage approprié en 11 sur leur bord latéral. L'existence des empreintes 10a facilite ce matriçage final.

La fixation des deux portions de bande l'une à l'autre est tout à fait solide et supprime tous les inconvénients d'une fixation amovible. D'autre part, la présence de la découpe terminale 6 évite, en regard du raccordement des deux portions de bande, les risques de fuite des tuyaux susceptibles d'être serrés au moyen du collier selon l'invention.

Enfin et surtout, la possibilité de réaliser des colliers de différents diamètres, à partir de « premières portions » identiques pour tous les diamètres, constitue un avantage économique appréciable.

**Revendications**

1. Collier de serrage du type comprenant deux portions (2-5) de bande, notamment en métal, fixées l'une à l'autre, une première portion (2) portant à l'une de ses extrémités une cosse (3) comprenant des moyens d'accrochage de profilages (5a) prévus sur l'autre portion (5) de la bande, lesdits moyens d'accrochage étant par exemple constitués par une vis (4) dont les filets viennent en prise avec les profilages, cependant qu'au voisinage de son extrémité opposée à la cosse (3), ladite première portion (2) présente deux languettes latérales (7) susceptibles d'être engagées dans deux encoches latérales (10) prévues en correspondance au voisinage de l'extrémité, opposée aux profilages, de la deuxième portion (5), caractérisé en ce que l'extrémité, opposée à la cosse (3), de la première portion (2) de bande présente une découpe terminale (6) en forme de langue, cependant que l'extrémité, opposée aux profilages, de la deuxième portion (5) présente un soyage (9) dont le fond est de forme complémentaire de celle de la découpe terminale (6) de la première portion (2) qui peut ainsi s'engager sous ce soyage, et que les languettes latérales (7) de la première portion (2) sont rabattues sur l'extrémité de la deuxième portion (5).

2. Collier de serrage selon la revendication 1, caractérisé en ce que le fond des encoches latérales (10) de la deuxième portion (5) de la bande présente au moins une empreinte en creux (10a) constituant un logement pour une nervure (8) des languettes (7) de la première portion.

3. Procédé de fabrication d'un collier de serrage selon l'une quelconque des revendications 1 et 2, caractérisé en ce qu'on réalise séparément, d'une part, la première portion (2) de bande et sa cosse (3), d'autre part, la deuxième portion (5) de bande et en ce que, après engagement de la découpe terminale (6) de la première portion dans le soyage (9) de la deuxième portion et engagement des languettes (7) de la première portion dans les encoches (10) de la deuxième portion, on rabat lesdites languettes par-dessus l'extrémité de ladite deuxième portion de bande jusqu'à ce qu'elles l'enserrent complètement.

4. Procédé selon la revendication 3, caractérisé en ce qu'on crée par matriçage du bord latéral des languettes (7) au moins une nervure (8) pénétrant dans l'empreinte (10a) correspondante des encoches (10) de la deuxième portion de bande.

**Claims**

1. Clamp of the type comprising two pieces (2-5) of band, such as in metal, joined one to the other, a first piece (2) having at one of its ends a lug (3) comprising means for fastening raised sections (5a) provided on the other piece (5) of band, said fastening means being for example constituted by a screw (4) of which the threads engage with the raised sections, whereas close to its end opposite to the lug (3), said first piece (2) is provided with two lateral flaps (7) adapted to be engaged in two lateral notches (10) correspondingly provided close to the end which is opposite to the raised sections, of the second piece (5), characterized in that the end opposite to the lug (3) of the first piece of band (2) is cut (6) in the form of a tongue, whereas the end opposite to the raised sections of the second piece (5), is provided with a hollow part (9) of which the bottom is complementarily shaped to the end cut part (6) of the first piece (2) which can thus engage under said hollow part, and in that the lateral flaps (7) of the first piece (2) are folded down on the end of the second piece (5).

2. Clamp according to claim 1, characterized in that the bottom of the lateral notches (10) of the second piece (5) of the band has at least one imprint (10a) which constitutes a housing for a rib (8) of the flaps (7) of the first piece.

3. Method for the manufacture of a clamp according to any one of claims 1 and 2, characterized in that it consists in producing, separately, on the one hand, the first piece (2) of band and its lug (3), on the other hand, the second piece (5) of band, and in that, after engagement of the end cut part (6) of the first piece into the hollow (9) of the second piece, and engagement of the flaps (7) of the first piece into notches (10) of the second piece, said flaps are folded down over the end of the second piece of band until they encircle it completely.

4. Method according to claim 3, characterized in that at least one rib (8) is created by stamping the lateral edge of the flaps (7) which rib penetrates into the corresponding imprint (10a) of the notches (10) of the second piece of band.

**Patentansprüche**

1. Klemmschelle mit zwei Bandteilen (2-5), insbesondere aus Metall, die aneinander befestigt sind, wobei ein Teil (2) an einem seiner Enden eine Schnalle (3) mit Profil-Einhakorganen (5a), die auf dem anderen Teil (5) des Bandes angeordnet sind, wobei die Einhakorgane z. B. aus einer Schraube (4) bestehen, deren Bindungen mit den Profilierungen in Eingriff gelangen, wohingegen der erste Teil (2) in der Nähe seines der Schnalle (3) gegenüberliegenden Endes zwei seitliche Zungen (7) aufweist, die in zwei seitliche Ausnehmungen (10) eingreifen können, die entsprechend in der Nähe des Endes, das den Profilierungen gegenüberliegt, den zweiten Teil (5) eingearbeitet sind, dadurch gekennzeichnet, daß das der Schnalle (3) gegenüberliegende Ende des ersten Teils (2) des Bandes einen Abschlußausschnitt (6) in Form einer Zunge aufweist, wohingegen das Ende des zweiten Teils (5), das der Profilierung gegenüberliegt, einen Kragen (9) aufweist, dessen Boden komplementär zu dem Endschnitt (6) des ersten Teils (2) ausgeformt ist und der somit unter diesen Kragen eingreifen kann, und dadurch, daß die seitlichen Zungen (7) des ersten Teils (2) auf dem Ende des zweiten Teils (5) umgeschlagen sind.

2. Klemmschelle nach Anspruch 1, dadurch gekennzeichnet, daß der Boden der seitlichen Ausnehmungen (10) des zweiten Teils (5) des Bandes mindestens eine hohle Eindrückung (10a) aufweist, die einen Lagersitz für eine Rippe (8) der Zunge (7) des ersten Teils bildet.

3. Verfahren zur Herstellung einer Klemmschelle nach einem der Ansprüche 1 und 2, dadurch gekennzeichnet, daß getrennt hergestellt werden, einerseits der erste Teil (2) des Bandes und seine Schnalle (3), andererseits der zweite Teil (5) des Bandes und dadurch, daß nach dem Eingreifen des Endschnittes (6) des ersten Teils in den Kragen (9) des zweiten Teils und dem Eingreifen der Zungen (7) des ersten Teils in die Ausnehmungen (10) des zweiten Teils die Zungen über das Ende des zweiten Teil des Bandes umgeschlagen werden, bis diese das Band vollständig umschlingen.

4. Verfahren nach Anspruch 3, dadurch gekennzeichnet, daß durch Warmverformung des Seitenrandes der Zungen (7) mindestens eine Rippe (8) gebildet wird, die in eine Hohlausnehmung (10a) eingreift, die den Ausnehmungen (10) des zweiten Teil des Bandes entspricht.

Fig. 1

Fig. 2

Fig. 3

Fig. 4

Fig. 5

Fig. 6

Fig. 7